# EUROPEAN PATENT SPECIFICATION

(11) **EP 3 914 479 B1**
(45) Date of publication and mention of the grant of the patent: **15.02.2023**
(21) Application number: 20703306.9
(22) Date of filing: 16.01.2020
(51) Int. Cl.: B60R 16/023, B60R 16/03

(54) **SAFETY DEVICE FOR MOTOR VEHICLES**
SICHERUNGSVORRICHTUNG FÜR EIN KRAFTFAHRZEUG
DISPOSITIF DE SÉCURITÉ POUR VÉHICULES AUTOMOBILES

(30) Priority: 21.01.2019 IT 201900000853
(43) Date of publication of application: 01.12.2021
(73) Proprietor: Mechanical Line Solutions S.r.l., 20145 Milano (IT)
(72) Inventor: BARTESAGHI, Dario, 20151 MILANO (IT); BARTESAGHI, Francesco, 20151 MILANO (IT)
(74) Representative: Riccardi, Sergio
(86) International application number: PCT/IT2020/050004
(87) International publication number: WO 2020/152726

(56) References cited:
- WO-A1-2014/014501
- US-A1- 2012 214 408
- US-A1- 2014 028 477
- US-A1- 2016 050 309
- US-A1- 2017 066 327

## Description

The present invention regards a safety device for motor vehicles, of the type specified in the preamble of the first claim.

Are currently known the safety issues of motor vehicles, in particular the ones caused by driver's distraction.

Particularly, driver's distraction in recent years has been caused by electronic devices usage, in particular smartphones and mobile phones.

For example, according to an Automobil Club Italia statistic made during 2016, motor vehicles accidents caused by improper mobile phone usage while driving are three out of four.

To remedy the present scenario, several national governments have tighten up the penalties related to the usage of electronic devices while driving. The penalties tightening up including vehicle withdrawal too.

Nonetheless, frequently, drivers are distracted by sudden phone calls and especially texts, to which they reply absent-mindedly and without thinking to the effects of such actions.

To remedy the present scenario, car manufacturers, or electronic devices manufacturers, have set up electronic systems incorporated in the motor vehicle, or suitable for being inserted in the motor vehicle, able to connect with the electronic device, for example via Bluetooth connection, allowing the phone calls transmission through speaker or microphone systems like speakerphone.

Moreover, with regards to devices installed into vehicles, the document US 2017/066327 discloses a safety system that inhibits the vehicle from being driven when the device installed into the vehicle detects an electronic device within the vehicle but being such electronic device not within a specific case. The document US 2016/050309, in turn, discloses an apparatus to enabling and disabling a vehicle whenever an electronic device is removed from an housing provided with a detection system of electronic devices, said enabling and disabling apparatus acting in an analogous manner to an antitheft device or to a car breathalyzer devices or Ignition Interlock Devices (IID) which prevent a vehicle from starting (i.e. should an operator's breath alcohol level be detected over a preset level).

The prior art described comprises some serious disadvantages.

In particular, drivers may forget to keep connection antenna active between the electronic device and the speakerphone system, without utilizing the latter.

In addition, such system does not remedy to electronic device usage for reading and writing texts.

Moreover, the above-mentioned patented systems have the objective of always blocking the vehicle functionality (inhibiting or disabling vehicles) whenever an electronic device is not in a predetermined position or it is found operative. This systems operation does not consider, in both cases US 2017/066327 and US 2016/050309, scenarios in which an user needs to utilize a vehicle, with limited speed for a maneuver or with the vehicle still but turned on just for the electric sockets, and simultaneously to use an electronic device to consult a map or to read an e-mail, and simultaneously to use a secondary function of a vehicle (i.e. air conditioning), as can be the case for a truck driver in a parking lot or in a loading and unloading bay. In addition, in both the mentioned documents, there is an express will to block or stop the vehicle operations (the devices acts like a antitheft device or like a car breathalyzer devices), unlike the here presented invention that can be compared to a sensor for the seatbelts, wherein is important the will of the user to utilize such a safety device. Such safety device, herein described according to the present invention, alerts the user of the lack of respect of the highway code but allows the full functionality of the vehicle, without compromising the safety and the convenience of use.

In this scenario, the technical purpose underlying the present invention is to design a safety device for motor vehicles able to solve basically at least part of the mentioned disadvantages.

Within the framework of said technical purpose it an essential objective of the present invention to obtain a safety device for motor vehicles able to reduce the number of accidents caused by electronic devices usage while driving.

Another essential objective of the invention is to produce a safety device for motor vehicles able to reduce the number of accidents caused by phone calls while driving.

Last but not least objective of the present invention is to produce a safety device for motor vehicles able to reduce the number of accidents caused by writing or reading texts while driving.

The technical purpose and the specified objectives are achieved by a safety device for motor vehicle, wherein the motor vehicle comprises command means suitable for command activation and functions of the motor vehicle, wherein the safety device comprises: control means functionally connectible with command means of the motor vehicle, connection means with an electronic device, such as a smartphone or the like, suitable for functionally connecting the electronic device with control means, localization means of the electronic device, suitable for checking if the electronic device is located in a predetermined localized area. Control means are additionally configured to signal or to hinder the active handling of said motor vehicle if connection means are not connected with the electronic device and if localization means do not locate the electronic device in the predetermined localized area.

Preferably, connection means comprises a connection cable, and localization means check the presence or absence of the connection of the connection cable with the electronic device.

Moreover, preferably, localization means comprises a presence sensor too, suitable for checking the presence of said electronic device in predetermined volume.

Preferably, again, connection means comprise a wireless connection too.

Control means are preferably configured to activate motor vehicle exterior lighting and to activate, in the interior compartment thereof, auditory and visual alerts (i.e. buzzer, warning lights) if connection means are not connected with the electronic device and if localization means do not locate the electronic device in the predetermined localized area. Control means can also be configured to activate exterior lighting if, in addition to other conditions, the speed of the motor vehicle exceed a speed limit.

Safety device can also comprise suitable notification means of the lack of connection of the electronic device with connection means.

The specified technical purpose and objectives will also be achieved by a motor vehicle comprising the described command means and the described safety device.

Moreover, the specified technical purpose and objectives will be achieved by a method to secure a motor vehicle comprising said command means and consisting in the step of:
- Preparing connection means suitable for functionally connecting the command means with the electronic device,
- automatically checking if the electronic device is located in a predetermined localized area,
- preparing command means in order to signal and to hinder the active handling of the motor vehicle if connection means are not connected with the electronic device and if localization means do not locate the electronic device in the predetermined localized area.

The automatic check is preferably obtained checking the connection of the electronic device with the connection means.

The features and the advantages of the invention are clarified in the following detailed description of preferred embodiments of the invention, with reference to the attached drawings, in which:

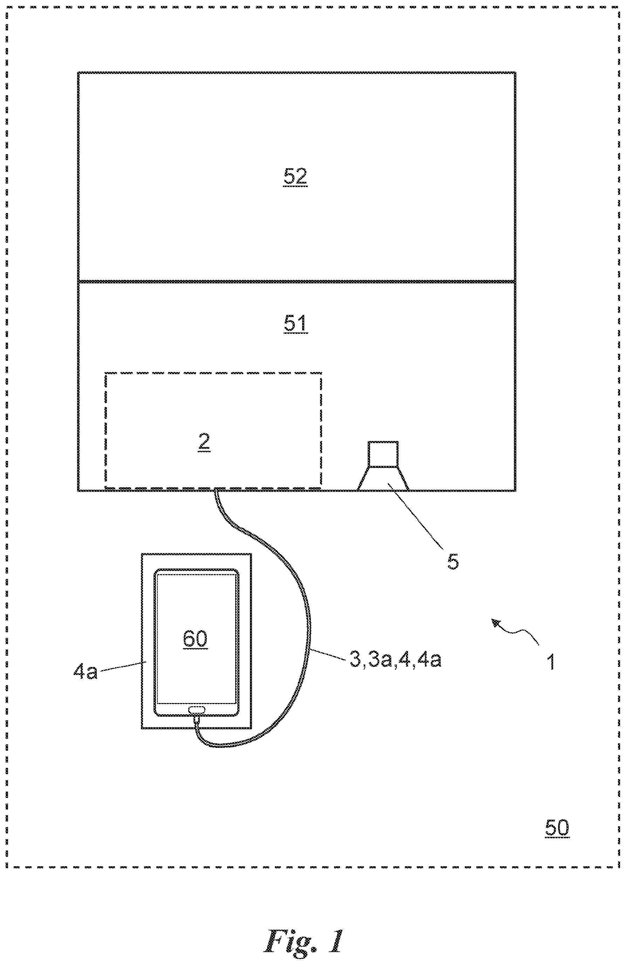

Fig.1 is a schematic view of the safety device for motor vehicles according to the invention.

In this document, measures, values, shapes and geometrical references (such as perpendicularity or parallelism), when linked to words like "approximately" or similar terms such as "nearly" or "substantially", are to be considered without measurement errors or inaccuracies caused by manufacturing and/or production errors and, above all, unless a small divergence from the value, from the measurement, from the shape or geometrical reference associate thereto.

Moreover, when employed, terms like "first", "second", "upper", "lower", "main" and "minor" do not necessarily identify an order, relation priory or relative position, but they may be simply utilized in order to distinguish explicitly different components between them.

Measurements and data herein reported have to be considered, unless instructed otherwise, as carried out in ICAO Standard Atmosphere (ISO 2533:1975).

With reference to Figures, safety device for motor vehicle according to the invention is globally referred to with number 1.

Safety device 1 is suitable for being applied on a motor vehicle 50, such as a car, a truck or the like. Preferably said safety device 1 is suitable for being applied on a car.

Motor vehicle 50 comprises, preferably, command means 51, suitable for commanding the activation and the functions of the motor vehicle 50. For example, they are suitable for commanding: the engine starter and therefore the active handling of the motor vehicle 50, the power on of exterior lightning and alerts, for example hazard lighting, or even the activation of internal devices as specified in the following.

Command means 50 preferably comprise a control unit of the motor vehicle 50, for example a conventional type control unit, or it may be broken up into different units inside the motor vehicle 50.

Safety device 1 is preferably suitable for controlling the use of at least an electronic device 60 in the motor vehicle 50, as better specified in the following. Electronic device 60 is preferably a mobile phone or smartphone, but it may also be another electronic device such as tablet, various players, laptop or the like.

Motor vehicle 50 also comprises, preferably, an on-board device 51, consisting for example of an acoustic speaker, a microphone and a screen. The on-board device 52 is suitable for interfacing with at least an electronic device 60 and for allowing the use, at least partial, of the electronic device 60, through the on-board device 52. The on-board device 52 allows, for example, receiving or making a phone call or vocal messages or the like. It is as such known and available in almost all last generation or recent cars.

Safety device 1 comprises, preferably, control means 2 functionally connectible with command means 51 of the motor vehicle 50. Control means 2 are preferably directly integrated into command means 51. They may therefore consist in a specific programming of the motor vehicle control unit during its production or performed later. Alternatively, control means 2 are specifically installed on a finished and functioning motor vehicle 50, connected with command means 51, in particular with the control unit. Moreover, command means 51 are conveniently functionally connected with the on-board device 52.

In addition, safety device 1 comprises, preferably, connection means 3 with the electronic device 60, suitable for functionally connecting the electronic device 60 with control means 2. They comprise, preferably, a connection cable 3a, suitable for being connected with said electronic device 60. Connection cable 3a is therefore connectible to a plurality of electric sockets, such as various USB^{®} types, Lightning^{®} and the like. Such sockets may be provided in a plurality of simultaneous outputs or via a specific adapter. The cable preferably measure less than 3 dm. Connection means 3 also properly connect together the electronic device 60 with the on-board device 52.

Connection means 3 may even comprise a wireless connection, in addition or alternatively to the connection cable 3a. Wireless connection is preferably of NFC^{®} type or, in addition or alternatively of different type, such as Bluetooth^{®} or WiFi. Alternatively, connection means 3 may even comprise a connection such as "wireless charging" or "inductive charging" that may even charge the electronic device 60 battery.

Safety device 1 comprises in addition, preferably, localization means 4 of the electronic device 60. They are suitable for checking if the electronic device 60 is located in a predetermined localized area. Localization means 4 preferably check the presence into the predetermined localized area by checking the presence or absence of the connection of the connection cable 3a with the electronic device 60. Electronic device 60 in fact, whereas connected with the cable 3a, cannot be moved outside the movement area defined by the terminal electronic connection of the cable 3a itself.

Said predetermined localized area is preferably not easy to reach for a motor vehicle 50 driver while driving. For example, said area is located outside the reach of a manual grab, or provide the electronic device 60 enclosed in a closed and hard to reach volume.

Wireless connections too, in particular connection like NFC^{®}, are active in short range (in the order of cm), therefore the active connection of the electronic device 60 with said wireless connections may constitute, at least in part, the localization means 4.

Localization means 4 may even comprise a presence sensor 4a suitable for checking the presence of the electronic device 60 in a predetermined volume. It may be, for example, a weight sensor, suitable for checking if the electronic device 60 is onto a specific surface, infrared or ultrasound presence sensors, cameras suitable for identifying the electronic device 60, or more.

Localization means 4 may also provide for the electronic device 60 to be inserted in a suitable tray or in a suitable concave space, such as a suitable opening or the like.

Safety device 1 also comprises, preferably, notification means 5 of the connection, or more preferably of the lack of connection of the electronic device 60 with the connection means 3 and of the lack of localization of the electronic device 60 in an area of predetermined volume.

Notification means 5 may therefore be added to the notification means already present on the motor vehicle, and can comprise auditory alerts into the interior compartment, such as buzzer or the like.

The operation of the safety device 1, thus far described in structural terms, is the following.

The user, upon turning on of the motor vehicle 50, connects his or her electronic device 60 to connection means 3 within the volumes defined by the localization means 4. In particular, the USB^{®} or Lightning^{®} socket of the smartphone is connected with the connection cable 3a.

Command means 51, possibly through control means 2, record therefore the connection of the electronic device 60.

Moreover, localization means 4 check if the electronic device 60 is in the predetermined localized area. In practice, if the electronic device 60 is connected with the cable 3a it cannot be moved in the whole motor vehicle 50 cabin. Similar remarks holds for short range wireless connections, NFC^{®} type, or for presence sensors 4a.

If the check of the localization means 4 and of the command means 51, or of the control means 2, gives a positive result, the motor vehicle 50 can be normally utilized.

Moreover, the electronic device 60 may be used via the on-board device 52, for example phone calls can be made through speakerphone and voice commands can activate messaging systems or the like. Simultaneously, the user cannot move the mobile phone outside the predetermined localized area, otherwise the localization means 4 will identify the said mobile phone absence.

If, before the departure or during the route, control means 2 or command means 51 check that connection means are not connected with the electronic device 60 and localization means 4 do not locate the electronic device 60 in the predetermined localized area, than control means 2 or command means 51 signal or hinder the active handling of the motor vehicle 50.

In particular, in this preferred example, in the above-mentioned case exterior lightning are activated, such as hazard lighting of a motor vehicles 50, and/or notification means 5 are activated, such as a buzzer in the interior compartment of the motor vehicle 50. Such a notification may occur if the vehicle is in motion, substantially at any speed, or if it exceeds a predetermined speed limit, such as 5 km/h or 10 km/h or others speed limits.

In another example, in the just mentioned case, the vehicle activation is hindered or its speed is limited, in particular is the device has not been activated jet.

The invention comprises a new method to secure a motor vehicle 50.

Motor vehicle 50 is preferably of the kind described. The method is preferably realized using a safety device 1 of the kind previously described and regulate the usage of an electronic device 60, of the kind previously described, within the motor vehicle 50.

The method consists, preferably, in the steps of: preparing connection means 3 already described, automatically checking, by means of localization means 4 already described, if the electronic device 60 is located in the predetermined localized area, if the electronic device 60 is located in the predetermined localized area, preparing command means 51 in order to signal and hinder the active handling of the motor vehicle 50, as previously described, if connection means 3 are not connected with the electronic device 60 and if localization means 4 do not locate the electronic device 60 in the predetermined localized area.

Safety device 1 according to the invention achieves important advantages.

In fact, safety device 1 force the motor vehicle 50 users to connect their electronic device 60 with command means 51 and to use the on-board device 52 to phone calls or the like. Consequently, it eliminates the problem of distract driving during phone calls, since the on-board device 52 is configured to allow a natural, non-distracting call for the user.

In addition, safety device 1 stops the user from sending or reading written texts while driving, since it holds the electronic device 60 in the predetermined localized area that is properly not available for the driver while driving. Therefore, the driver cannot utilize the electronic device 60 without activating control means 2 or command means 51 signaling or hindering the active handling of the motor vehicle 50. The electronic device 60 and related messaging services may be possibly utilized through the on-board device 52, this too designed to not distract the user from driving.

Motor vehicle 50 user is thus highly discouraged from inappropriate utilization of electronic devices 60 while driving. Consequently, the number of accidents caused by improper use of electronic devices 60 would be strongly reduced.

The invention is susceptible of variations, which are part of the inventive concept defined in the claims. Within this context, any detail may be substituted by an equivalent feature and materials, shapes and dimensions can be any material, shape and dimension.

## Claims

1. Safety device (1) for a motor vehicle (50), comprising:
- control means (2) functionally connectible to command means (51) which command the activation and the functions of said motor vehicle (50),
- connection means (3) with a further electronic device (60) on board, used to functionally connect said electronic device (60) to said control means (2),
- localization means (4) of said electronic device (60), used to check if said electronic device (60) is located in a predetermined localized area inside the vehicle interior compartment,
- notification means (5) of a lack of connection of said electronic device(60) with said connection means(3),
- aforementioned safety device (1) being **characterized in that** said control means (2) configured to signal or to hinder the active handling of said motor vehicle (50) if said connection means of are not connected with said electronic device (60), and if said localization means (4) do not locate said electronic device (60) in said predetermined localized area, and wherein said notification means (5), of said lack of connection of said electronic device (60) with said connection means (3), can be activated if said motor vehicle (50) exceeds a predetermined speed limit.

2. Safety device (1) as defined in Claim 1, wherein said connection means (3) consist of a connection cable (3a) and wherein said localization means (4) check the presence or absence of connection of said connection cable (3a) with said electronic device (60).

3. Safety device (1) as defined in any preceding claim, wherein said localization means (4) consist of a presence sensor (4a) suitable for check the actual presence of said electronic device (60) within a predetermined volume.

4. Safety device (1) as defined in any preceding claim, wherein said connection means (3) consist of a wireless connection.

5. Safety device (1) as defined in any preceding claim, wherein said control means (2) configured to activate exterior car lighting of said motor vehicle (50) if said connection means not connected with said electronic device (60), and if said localization means (4) do not locate said electronic device (60) in said predetermined localized area.

6. Motor vehicle (50) consisting of command means (51) suitable for commanding the activation and the functions of said motor vehicle (50), and a safety device (1) as defined in any preceding claim.

7. Method to secure a motor vehicle (50)
- said motor vehicle comprising of command means (51) suitable for commanding the activation and the functions of said motor vehicle (50),
- said method comprising the steps of:
- preparing connection means (3) suitable for functionally connect said command means (51) to an electronic device (60),
- automatically checking if said electronic device (60) is located in a predetermined localized area,
- preparing said command means (51) in order to signal or to hinder the active handling of said motor vehicle (50) if said connection means are not connected with said electronic device (60), and if said localization means (4) do not locate said electronic device (60) in said predetermined localized area,
- notify via said notification means (5) the lack of connection of said electronic device (60) with said connection means (3) if said motor vehicle (50) exceeds a predetermined speed limit.

8. Method to secure a motor vehicle (50) as defined in Claim 7, wherein said automatic check is achieved checking said connection of the electronic device (60) to said connection means (3).

## Patentansprüche

1. Sicherungsvorrichtung (1) für ein Kraftfahrzeug (50) enthaltend:
- Kontrollmittel (2), die mit den die Betätigung und den Betrieb des Fahrzeugs (50) steuernden Steuermitteln (51) funktionell verbindbar sind;
- Verbindungsmittel (3) mit einer weiteren an Bord anwesenden elektronischen Vorrichtung (60), die für die funktionelle Verbindung der besagten elektronischen Vorrichtung (60) mit den besagten Kontrollmitteln (2) geeignet sind;
- Lokalisierungsmittel (4) für die besagte elektronische Vorrichtung (60) um zu überprüfen, ob die besagte elektronische Vorrichtung (60) sich in einem Gebiet von in voraus festgelegten Lagen im Inneren des Fahrerraums befindet;
- Meldungsmittel (5) einer fehlenden Verbindung der elektronischen Vorrichtung (60) mit den besagten Verbindungsmitteln (3);
- die oben bezeichnete Sicherungsvorrichtung (1) ist **dadurch gekennzeichnet, dass** die Kontrollmittel (2) so konfiguriert werden, um die aktive Bewegung des Kraftfahrzeuges (50) anzuzeigen bzw. zu behindern, wenn die Verbindungsmittel (3) mit der besagten elektronischen Vorrichtung (60) nicht verbunden sind und die besagten Lokalisierungsmittel (4) die besagte elektronische Vorrichtung (60) im Gebiet von im voraus festgelegten Lagen nicht lokalisieren, und worin die besagten Meldungsmittel (5) der fehlenden Verbindung der besagten elektronischen Verbindung mit den Verbindungsmitteln (1) aktiviert werden können, als das Kraftfahrzeug (50) eine vorgegebene Geschwindigkeitsbegrenzung überschreitet.

2. Sicherungsvorrichtung (1) nach Anspruch 1, worin die besagten Verbindungsmittel (3) aus einem Steckerkabel (3a) bestehen und die besagten Lokalisierungsmittel (4) den Anschluss des besagten Steckerkabels (3a) mit der elektronischen Vorrichtung (60) prüfen.

3. Sicherungsvorrichtung (1) nach einem der vorhergehenden Ansprüchen, worin die besagten Lokalisierungsmittel (4) einen Anwesenheitsensor (4a) enthalten, der die Anwesenheit der besagten elektronischen Vorrichtung (60) in einem vorgegebenen Umfang prüft.

4. Sicherungsvorrichtung (1) nach einem der vorhergehenden Ansprüchen, worin die besagten Verbindungsmittel (3) aus einer kabellosen Verbindung bestehen.

5. Sicherungsvorrichtung (1) nach einem der vorhergehenden Ansprüchen, worin die besagten Kontrollmittel (2) darauf konfiguriert werden, um die Leuchte des Kraftfahrzeugs (50) zu betätigen, wenn die Verbindungsmittel mit der elektronischen Vorrichtung (60) nicht verbunden sind, und die Lokalisierungsmittel (4) die besagte elektronische Vorrichtung (60) im Gebiet von im voraus festgelegten Lagen nicht lokalisieren.

6. Kraftfahrzeug (50) enthaltend Bedienungsmittel (51) für die Steuerung der Aktivierung und die Funktionen des Kraftfahrzeugs (50) und der Funktionen des Kraftfahrzeugs (50), und eine Sicherungsvorrichtung (1) nach einem der vorhergehenden Ansprüchen.

7. Sicherheitsverfahren für ein Kraftfahrzeug (50) worin
- das Kraftfahrzeug enthält Bedienungsmittel (51) für die Steuerung der Aktivierung und der Funktionen des besagten Kraftfahrzeugs (50),
- das besagte Verfahren besteht aus
- der Vorbereitung von Verbindungsmitteln (3) für die funktionelle Verbindung der besagten Bedienungsmittel (51) mit einer elektronischen Vorrichtung (60);
- der automatischen Prüfung ob die besagte elektronische Vorrichtung (60) sich in einem Gebiet von im voraus festgelegten Lagen befindet;
- der Vorbereitung von Bedienungsmittel (51), um die aktive Bewegung des besagten Kraftfahrzeugs (50) anzuzeigen bzw. zu behindern, wenn die Verbindungsmittel (3) mit der besagten elektronischen Vorrichtung (60) nicht verbunden sind und die besagten Lokalisierungsmittel (4) die besagte elektronische Vorrichtung (60) im Gebiet von im voraus festgelegten Lagen nicht lokalisieren;
- die Mitteilung durch die Meldungsmittel (5) einer fehlenden Verbindung der besagten elektronischen Vorrichtung (60) mit den Verbindungsmitteln (3), als das Kraftfahrzeug (50) eine vorgegebene Geschwindigkeitsbegrenzung überschreitet.

8. Sicherheitsverfahren für ein Kraftfahrzeug nach Anspruch 7, worin die besagte automatische Prüfung mittels Prüfung der besagten Verbindung der elektronischen Vorrichtung (60) mit den Verbindungsmitteln (3) erhalten wird.

## Revendications

1. Dispositif de sécurité pour véhicules automobiles (50) comprenant :
- moyens de contrôle (2) fonctionnellement connectables aux moyens de commande (51) qui commandent l'activation et les fonctions du dit véhicule automobile (50) ;
- moyens de connexion (3) avec un ultérieur dispositif électronique (60) à bord, aptes à connecter fonctionnellement ledit dispositif électronique (60) aux lesdits moyens de contrôle (2) ;
- moyens de localisation (4) dudit dispositif électronique (60), aptes à vérifier si ledit dispositif électronique (60) est disposé dans une zone des positions préétablies à l'intérieur de l'habitacle dans le véhicule ;
- moyens de notification (5) de manque de connexion dudit dispositif électronique (60) avec lesdits moyens de connexion (3) ;
Le dispositif de sécurité susmentionné étant **caractérisé en ce que** lesdits moyens de contrôle (2) sont configurés pour signaler ou empêcher la manoeuvre active dudit véhicule automobile (50) lorsque lesdits moyens de connexion (3) ne sont pas connectés avec ledit dispositif électronique (60), et lesdits moyens de localisation (4) ne localisent pas ledit dispositif électronique (60) dans ladite zone des positions préétablies, et dont lesdits moyens de notification (5) du manque de connexion du dit dispositif électronique avec lesdits moyens de connexion (3) peuvent être activés si ledit véhicule automobile (50) dépasse la limite de vitesse autorisée.

2. Dispositif de sécurité selon la revendication 1, dont lesdits moyens de connexion (3) comprennent un câble de connexion (3a) et les dits moyens de localisation (4) vérifient la présence ou absence de de connexion dudit câble de connexion (3a) avec ledit dispositif électronique (60).

3. Dispositif de sécurité selon une revendication quelconque précédente, dont lesdits moyens de localisation (4) comprennent un capteur de présence (4a) apte à vérifier la présence effective dudit dispositif électronique (60) dans un volume prédéterminé.

4. Dispositif de sécurité selon une revendication quelconque précédente, dont les moyens de connexion sont une connexion sans fil (Wireless).

5. Dispositif de sécurité selon une revendication quelconque précédente, dont les moyens de contrôle (2) sont configurés pour activer l'éclairage extérieur du véhicule automobile (50) si lesdits moyens de connexion ne sont pas reliés avec ledit dispositif électronique (60) et les dits moyens de localisation (4) ne localisent pas ledit dispositif électronique (60) dans ladite zone localisée prédéterminée.

6. Véhicule automobile (50) comprenant moyens de commande (51) aptes à commander l'activation et les fonctions dudit véhicule automobile (50) et un dispositif de sécurité selon une revendication quelconque précédente.

7. Procédé de sécurité pour un véhicule automobile (50), ledit véhicule comprenant moyens de commande (51) aptes pour commander l'activation et les fonctions dudit véhicule automobile (50); ledit procédé comprenant les phases de:
- préparer moyens de connexion (3) aptes pour connecter fonctionnellement lesdits moyens de commande (51) avec un dispositif électronique (60) ;
- vérifier automatiquement si ledit dispositif électronique (60) est positionné dans une aire des positions fixés ;
- préparer lesdits moyens de commande (51) pour signaler ou entraver le mouvement actif dudit véhicule automobile (50) si lesdits moyens de connexion (3) ne sont pas connectés avec ledit dispositif électronique (60), et si les moyens de localisation (4) ne localisent pas ledit dispositif électronique (60) dans l'aire des positions fixés ;
- notifier par lesdits moyens de notification (59 la manque de connexion dudit dispositif électronique (60) avec lesdits moyens de connexion (3) si le véhicule automobile (50) dépasse une limite de vitesse autorisée.

8. Procédé de sécurité pour un véhicule automobile (50) selon la revendication 7, dont ladite vérification automatique est effectuée en vérifiant ladite connexion du dispositif électronique (60) avec lesdits moyens de connexion (3).
